# FASCICULE DE BREVET EUROPEEN

(11) **EP 3 458 503 B1**
(45) Date de publication et mention de la délivrance du brevet: **01.07.2020**
(21) Numéro de dépôt: 17731212.1
(22) Date de dépôt: 19.05.2017
(51) Int. Cl.: C08G 8/04, C09J 109/06, F16G 1/28, D06M 15/41, D06M 15/693, B29D 29/10, C09J 161/12, F16G 1/08, D06M 15/00, C08J 5/06

(54) **COMPOSITE ET COURROIE DE TRANSMISSION DE PUISSANCE**
KOMPOSIT FÜR KRAFTÜBERTRAGUNG UND KRAFTÜBERTRAGUNGSRIEMEN
COMPOSITE AND BELT FOR POWER TRANSMISSION

(30) Priorité: 20.05.2016 FR 1654526
(43) Date de publication de la demande: 27.03.2019
(73) Titulaire: Compagnie Générale des Etablissements Michelin, 63000 Clermont-Ferrand (FR)
(72) Inventeur: DOISNEAU, David, 63040 Clermont-Ferrand Cedex 9 (FR); ROGNON, Julie, 37540 SAINT CYR SUR LOIRE (FR)
(74) Mandataire: Desbordes, Guillaume
(86) Numéro de dépôt international: PCT/FR2017/051227
(87) Numéro de publication internationale: WO 2017/198967

(56) Documents cités:
- WO-A1-2012/112240
- WO-A2-2014/111440
- FR-A1- 2 978 770
- FR-A1- 3 017 071
- US-A- 5 891 561
- US-A1- 2012 125 506

## Description

Le domaine de la présente invention est celui des composites comprenant un matériau élastomérique et des éléments de renfort noyés dans ce matériau élastomérique. La présente invention est plus particulièrement relative à de tels composites formant des courroies de transmission de puissance.

On connait de l'état de la technique, notamment de WO2015/151010, un composite formant une courroie de transmission de puissance comprenant un matériau élastomérique comprenant au moins un élastomère de type éthylène alpha oléfine, par exemple de l'EPDM, et des éléments de renforts noyés dans ce matériau élastomérique.

Chaque élément de renfort est un brin multifilamentaire de monofilaments élémentaires textiles. Chaque élément de renfort est imprégné par une composition assurant la cohésion des monofilaments du brin multifilamentaire les uns avec les autres et permettant d'éviter l'effilochage de chaque élément de renfort. Cette composition de cohésion, formant une couche au cœur de l'élément de renfort, est issue de la réaction d'un ou plusieurs isocyanates et comprend par exemple une urétidinedione, un isocyanurate ou un mélange de ces deux composés. Chaque élément de renfort imprégné est revêtu d'une couche adhésive. La couche adhésive comprend une composition adhésive de type RFL (Résorcinol-Formaldéhyde-Latex). Ces compositions adhésives de type RFL comprennent de manière bien connue une résine phénolique thermodurcissable, obtenue par la condensation du résorcinol avec le formaldéhyde, et un ou plusieurs latex de caoutchouc diénique en solution aqueuse.

Or, il est souhaitable de diminuer, voire de supprimer à terme le formaldéhyde des composites d'élastomères en raison de son impact environnemental et de l'évolution récente de la réglementation, notamment la règlementation européenne, sur ce type de composé.

L'invention a pour but de fournir des composites comprenant de nouveaux systèmes adhésifs simples permettant de maintenir, voire d'améliorer, l'endurance de ces composites.

L'invention a pour objet un composite comprenant :
- au moins un élément de renfort,
- une couche adhésive réalisée dans une composition adhésive et revêtant l'élément de renfort,
- une couche élastomérique de liaison réalisée dans une composition élastomérique de liaison et revêtant directement la couche adhésive,
- un corps élastomérique réalisé dans une matrice élastomérique et dans lequel est noyé l'élément de renfort revêtu de la couche adhésive et de la couche élastomérique de liaison,
la composition adhésive comportant au moins une résine phénol-aldéhyde à base:
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
- d'au moins un aldéhyde aromatique porteur d'au moins une fonction aldéhyde, comprenant au moins un noyau aromatique.

Par "position méta l'une par rapport à l'autre", on entendra que les fonctions hydroxyle sont portées par des carbones du noyau aromatique séparés l'un de l'autre par un unique autre carbone du noyau aromatique.

Par "en position ortho d'une fonction", on entendra la position occupée par le carbone du noyau aromatique immédiatement adjacent au carbone du noyau aromatique portant la fonction.

Par l'expression « composition à base de », il faut bien entendu comprendre une résine comportant le mélange et/ou le produit de réaction des différents constituants de base utilisés pour cette résine, certains d'entre eux pouvant être destinés à réagir ou susceptibles de réagir entre eux ou avec leur environnement chimique proche, au moins en partie, lors des différentes phases de fabrication de la résine, de l'élément de renfort, du composite, en particulier au cours d'une étape de réticulation.

Conformément à la désignation « polyphénol aromatique », le noyau aromatique porteur d'au moins deux fonctions hydroxyle en position méta l'une par rapport à l'autre, les deux positions ortho d'au moins une des fonctions hydroxyle étant non substituées est un noyau benzénique.

La composition adhésive comprend donc au moins une (c'est-à-dire une ou plusieurs) résine phénol-aldéhyde; cette résine phénol-aldéhyde étant à base d'au moins un (c'est-à-dire un ou plusieurs) un polyphénol aromatique et au moins un (c'est-à-dire un ou plusieurs) aldéhyde aromatique, constituants qui vont être décrits en détail ci-après.

Par matrice élastomérique, on entend une matrice à comportement élastomérique.

Par couche élastomérique de liaison, on entend une couche à comportement élastomérique assurant une liaison physicochimique entre la couche adhésive et la matrice élastomérique.

Par couche revêtant « directement » un objet, on entend que la couche est au contact de l'objet sans qu'aucun autre objet, notamment une autre couche ne soit interposé entre les deux.

Dans la présente description, sauf indication expresse différente, tous les pourcentages (%) indiqués sont des pourcentages en poids. Le sigle « pce » signifie parties en poids pour cent parties d'élastomère.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

### COMPOSITE SELON L'INVENTION

### Polyphénol aromatique

Conformément à l'invention le polyphénol aromatique peut être une molécule simple comprenant un ou plusieurs noyaux aromatiques, au moins un de ces noyaux aromatiques, voire chaque noyau aromatique étant porteur d'au moins deux fonctions hydroxyle en position méta l'une par rapport à l'autre, les deux positions ortho d'au moins une des fonctions hydroxyle étant non substituées. Une telle molécule simple ne comprend pas de motif répétitif.

Conformément à l'invention, le polyphénol aromatique peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec ledit polyphénol aromatique comprenant une fonction aldéhyde, par exemple un aldéhyde aromatique porteur d'au moins une fonction aldéhyde, comprenant au moins un noyau aromatique mais alternativement un aldéhyde non conforme à l'invention, par exemple le formaldéhyde.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

Dans un autre mode de réalisation, le polyphénol aromatique est un mélange d'un polyphénol aromatique formant une molécule simple et d'une résine pré-condensée à base de polyphénol aromatique.

Dans les modes de réalisation particuliers qui suivent, on décrit le ou les noyaux aromatiques du polyphénol aromatique. Par souci de clarté, on y décrit le « polyphénol aromatique » sous sa forme de molécule simple. Ce polyphénol aromatique pourra ensuite être condensé et définira en partie le motif répétitif. Les caractéristiques de la résine pré-condensée sont décrites plus en détail par la suite.

Dans un mode de réalisation préféré, le noyau aromatique du polyphénol aromatique est porteur de trois fonctions hydroxyle en position méta les unes par rapport aux autres.

De préférence, les deux positions ortho de chaque fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique du polyphénol aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le polyphénol aromatique comprend plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Dans un mode de réalisation préféré, au moins un des noyaux aromatiques du polyphénol aromatique est porteur de trois fonctions hydroxyle en position méta les unes par rapport aux autres.

De préférence, les deux positions ortho de chaque fonction hydroxyle d'au moins un noyau aromatique sont non substituées.

Encore plus préférentiellement, les deux positions ortho de chaque fonction hydroxyle de chaque noyau aromatique sont non substituées.

Avantageusement, chaque noyau aromatique du polyphénol aromatique est un noyau benzénique.

A titre d'exemple de polyphénol aromatique comportant un seul noyau
aromatique, on peut citer en particulier, le résorcinol et le phloroglucinol, pour rappel de formules développées :

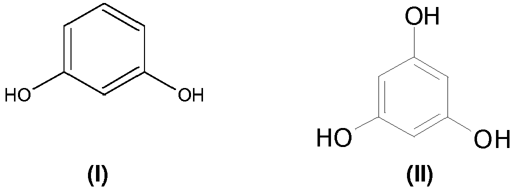

A titres d'exemples, dans le cas où le polyphénol aromatique comporte plusieurs noyaux aromatiques, au moins deux de ces noyaux aromatiques, identiques ou différents, sont choisis parmi ceux de formules générales : 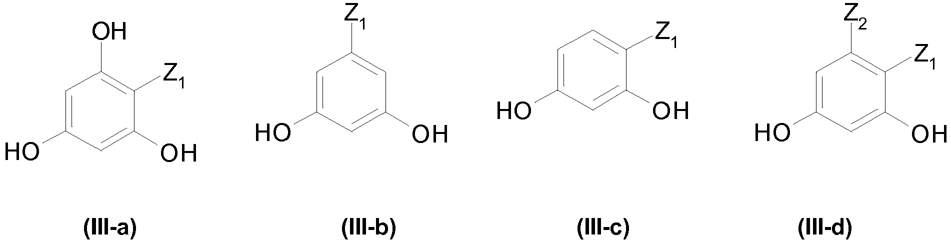 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide de formule développée suivante :

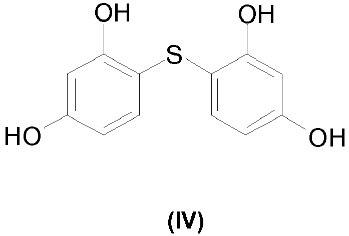

Un autre exemple de polyphénol aromatique est le 2,2',4,4'-tétrahydroxydiphényl benzophénone de formule développée suivante :

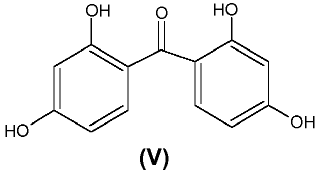

On note que chaque composé IV et V est un polyphénol aromatique comportant deux noyaux aromatiques (de formules **III-c**) dont chacun est porteur d'au moins deux (en l'occurrence de deux) fonctions hydroxyle en position méta l'une par rapport à l'autre.

On note que dans le cas d'un polyphénol aromatique comportant au moins un noyau aromatique conforme à la formule **III-b**, les deux positions ortho de chaque fonction hydroxyle d'au moins un noyau aromatique sont non substituées. Dans le cas d'un polyphénol aromatique comportant plusieurs noyaux aromatiques conformes à la formule **III-b**, les deux positions ortho de chaque fonction hydroxyle de chaque noyau aromatique sont non substituées.

Selon un mode de réalisation de l'invention, le polyphénol aromatique est choisi dans le groupe constitué par le résorcinol (**I**), le phloroglucinol (**II**), le 2,2',4,4'-tétrahydroxydiphényl sulfide (**IV**), la 2,2',4,4'-tétrahydroxybenzophenone (**V**), les résines pré-condensées à partir d'au moins un de ces polyphénols aromatiques et les mélanges de ces composés. Dans un mode de réalisation particulièrement avantageux, le polyphénol aromatique est le phloroglucinol.

Dans un mode de réalisation, le polyphénol aromatique comprend une résine pré-condensée à base du polyphénol aromatique tel que décrit dans l'un quelconque de ces modes de réalisations.

Cette résine pré-condensée est avantageusement à base :
- d'au moins un polyphénol aromatique tel que défini précédemment, et préférentiellement choisi dans le groupe constitué par le résorcinol, le phloroglucinol, le 2,2',4,4'-tétrahydroxydiphényl sulfide, la 2,2',4,4'-tétrahydroxybenzophenone, et leurs mélanges ; et
- d'au moins un composé susceptible de réagir avec ledit polyphénol aromatique comprenant une fonction aldéhyde, et préférentiellement un aldéhyde aromatique porteur d'au moins une fonction aldéhyde, comprenant au moins un noyau aromatique.

Avantageusement, le composé susceptible de réagir avec ledit polyphénol aromatique comprenant une fonction aldéhyde est choisi dans le groupe constitué par le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, le composé comprenant une fonction aldéhyde est choisi dans le groupe constitué par le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés.

Ainsi, dans la résine pré-condensée à base de polyphénol aromatique, le motif répétitif répond aux caractéristiques du polyphénol aromatique définies précédemment à l'exception qu'au moins un des atomes de carbone du noyau aromatique, qui était non substitué, est relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec le polyphénol aromatique conforme à l'invention dans une étape ultérieure.

Le polyphénol aromatique peut également comprendre un mélange d'une molécule libre de polyphénol aromatique et d'une résine pré-condensée à base de polyphénol aromatique, telle que décrite précédemment. En particulier, le polyphénol aromatique peut également comprendre un mélange de phloroglucinol et d'une résine pré-condensée à base de phloroglucinol.

### Aldéhyde aromatique

De préférence, le noyau aromatique de l'aldéhyde aromatique est porteur de la fonction aldéhyde.

Plus préférentiellement, l'aldéhyde aromatique est un polyaldéhyde aromatique dans lequel le noyau aromatique est porteur d'au moins deux fonctions aldéhydes.

Dans un mode de réalisation, le noyau aromatique de l'aldéhyde aromatique est choisi dans le groupe constitué par un noyau benzénique et un noyau furanique, de préférence le noyau aromatique de l'aldéhyde aromatique est un noyau benzénique un noyau benzénique.

Dans un autre mode de réalisation l'aldéhyde aromatique est de formule générale **(A):** 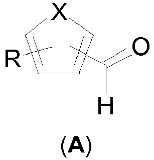 dans laquelle :
X comprend N, S ou O
R représente -H ou -CHO.

Préférentiellement, l'aldéhyde est de formule générale **(A'):**

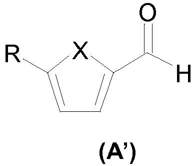

Encore plus préférentiellement, R représente -CHO.

Selon un mode de réalisation préférentiel, X représente O.

Dans une variante de l'aldéhyde de formule générale **(A),** X représente O et R représente -H. L'aldéhyde utilisé est alors de formule **(Ba):**

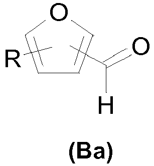

Dans une variante de l'aldéhyde de formule générale **(A'),** X représente O et R représente -H. L'aldéhyde utilisé est alors le furfuraldéhyde et est de formule **(B'a):**

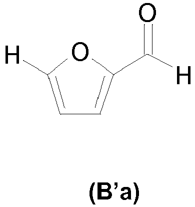

Dans une autre variante de l'aldéhyde de formule générale **(A),** X représente O et R représente -CHO. L'aldéhyde utilisé est alors de formule **(Bb):**

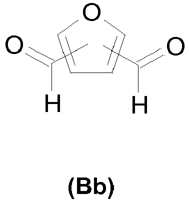

Dans une autre variante de l'aldéhyde de formule générale **(A'),** X représente O et R représente -CHO. L'aldéhyde utilisé est alors le 2,5-furanedicarboxaldéhyde et est de formule **(B'b):**

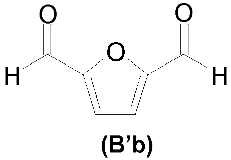

Dans un autre mode de réalisation, X comprend N.

Dans une variante de l'aldéhyde de formule générale **(A),** X représente NH. L'aldéhyde utilisé est de formule **(Ca):**

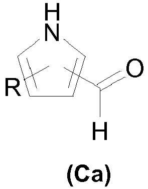

Dans une variante de l'aldéhyde de formule générale **(A'),** X représente NH. L'aldéhyde utilisé est de formule **(C'a):**

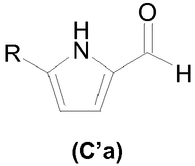

De préférence, R représente -CHO dans la variante de l'aldéhyde de formule **(C'a)** et l'aldéhyde obtenu est alors le 2,5-1H-pyrroledicarboxaldéhyde.

Dans une autre variante de l'aldéhyde de formule générale **(A),** X représente NR1 avec R1 représentant un groupe alkyle, aryle arylalkyle, alkylaryle ou cycloalkyle. L'aldéhyde utilisé est de formule **(Cb):**

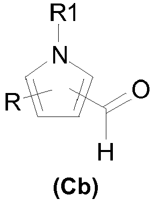

Dans un autre mode de réalisation, X comprend S.

Dans une variante de l'aldéhyde de formule générale **(A),** X représente S. L'aldéhyde utilisé est de formule **(Da):**

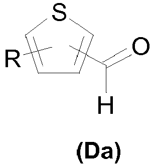

Dans une variante de l'aldéhyde de formule générale **(A'),** X représente S. L'aldéhyde utilisé est de formule **(D'a):**

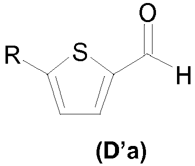

De préférence, R représente -CHO dans la variante de l'aldéhyde de formule **(IV'a)** et est alors le 2,5-thiophènedicarboxaldéhyde.

Dans une autre variante de l'aldéhyde de formule générale **(A),** X représente SR2 avec R2 représentant un groupe alkyle, aryle arylalkyle, alkylaryle ou cycloalkyle. L'aldéhyde utilisé est de formule **(Db):**

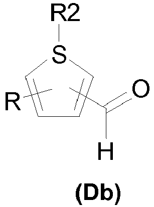

Dans encore une autre variante de l'aldéhyde de formule générale **(A),** X représente R3-S-R2 avec R2, R3 représentant chacun indépendamment l'un de l'autre un groupe alkyle, aryle arylalkyle, alkylaryle ou cycloalkyle. L'aldéhyde utilisé est de formule **(Dc):**

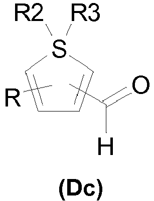

Dans encore une autre variante de l'aldéhyde de formule générale **(A),** X représente S=O. L'aldéhyde utilisé est de formule (Dd):

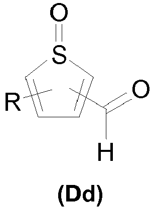

Dans encore une autre variante de l'aldéhyde de formule générale **(A),** X représente O=S=O. L'aldéhyde utilisé est de formule **(De):**

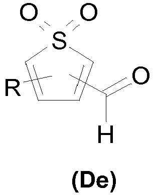

Parmi les différents modes de réalisation décrits ci-dessus, on préfèrera les modes de réalisation et les variantes dans lesquels X représente NH, S ou O. Dans ces modes de réalisation et variantes, on pourra avoir, conformément à l'invention, R représentant -H ou -CHO et de préférence R représentant -CHO. Dans ces modes de réalisation et variantes, on aura préférentiellement R en position 5 et le groupe -CHO en position 2 sur le noyau aromatique (formule générale **(A')**).

De préférence, la composition adhésive est dépourvue de formaldéhyde.

Lorsque la résine phénol-aldéhyde est à base de plusieurs aldéhydes dont l'un au moins est un aldéhyde aromatique conforme à l'invention, chaque aldéhyde autre que l'aldéhyde aromatique conforme à l'invention est préférentiellement différent du formaldéhyde. La composition adhésive est alors également préférentiellement dépourvue de formaldéhyde.

En d'autres termes et de manière préférée, le ou chaque aldéhyde de la résine phénol-aldéhyde est différent du formaldéhyde.

Par dépourvue de formaldéhyde, on entend que le taux massique de formaldéhyde en poids total du ou des aldéhydes est strictement inférieur à 1%.

Dans certains modes de réalisation, la composition adhésive peut comprendre du formaldéhyde. De préférence, la composition adhésive comprend alors un taux massique de formaldéhyde en poids total du ou des aldéhydes inférieur ou égal à 10%, de préférence à 5% et plus préférentiellement à 2%.

Dans encore un autre mode de réalisation, l'aldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le furfuraldéhyde, le 2,5-furanedicarboxaldéhyde et les mélanges de ces composés, de préférence l'aldéhyde aromatique est choisi parmi le 1,3-benzène-dicarboxaldéhyde, le 1,4-benzène-dicarboxaldéhyde, le furfuraldéhyde, le 2,5-furanedicarboxaldéhyde et les mélanges de ces composés, plus préférentiellement l'aldéhyde aromatique est le 1,4-benzène-dicarboxaldéhyde.

### Autres composés préférentiels de la composition adhésive

De façon préférée, la composition adhésive comprend au moins un latex d'élastomère insaturé. On rappelle qu'un latex est une dispersion stable de microparticules d'élastomère(s) en suspension dans une solution aqueuse. Les latex d'élastomère insaturé (c'est-à-dire porteur de doubles liaisons carbone-carbone), notamment d'élastomère diénique, sont bien connus de l'homme du métier.

Le ou les élastomères du latex est ou sont dispersés dans la résine et assure ou assurent une bonne liaison entre la couche adhésive et le matériau élastomérique dans lequel l'élément de renfort est noyé. Un tel latex présente également l'avantage d'être relativement souple et flexible ce qui permet d'accompagner les déformations de l'élément de renfort sans que la couche adhésive ne rompe. Enfin, le ou les élastomères d'un tel latex présente ou présentent l'avantage de présenter du collant à cru avec le matériau élastomérique dans lequel l'élément de renfort est noyé. Ainsi, lors de la fabrication du composite, l'élément de renfort revêtu de la composition adhésive adhère au matériau élastomérique qui ne glisse pas autour de l'élément de renfort revêtu.

L'élastomère insaturé du latex est préférentiellement un élastomère diénique, plus préférentiellement un élastomère diénique choisi de préférence dans le groupe constitué par les polybutadiènes, les copolymères de butadiène, les polyisoprènes, les copolymères d'isoprène, les terpolymères vinylpyridine-styrène-butadiène, les élastomères de type éthylène alpha oléfine, les élastomères polychloroprène et les mélanges de ces élastomères. Avantageusement, l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

La composition adhésive aqueuse conforme à l'invention peut bien entendu comporter tout ou partie des additifs habituels pour compositions adhésives aqueuses telles que ceux utilisés dans les colles RFL conventionnelles ; on citera par exemple des bases telles que ammoniaque, hydroxyde de sodium, de potassium ou d'ammonium, des colorants, charges telles que noir de carbone ou silice, antioxydants ou autre stabilisants, et des épaississants, par exemple la carboxyméthylecellulose, ou des gélifiants, par exemple une gélatine, permettant d'augmenter la viscosité de la composition. On citera également les additifs permettant de modifier le temps de prise ou de gel et le temps d'ouverture de la résine. De façon connue par l'homme du métier, le temps de prise ou de gel est le temps pendant lequel on peut appliquer la résine sur son substrat et le temps d'ouverture est le temps pendant lequel, après application de la résine sur son substrat, on peut laisser la résine à l'air libre sans altérer la qualité de la liaison adhésive ultérieure avec le substrat complémentaire. Le temps de prise ou de gel et le temps d'ouverture sont notamment fonction de la température, de la pression ou encore de la concentration en résine.

### Procédé de fabrication de la composition adhésive

On définit N1 comme le nombre de sites réactifs de l'aldéhyde aromatique comme suit : une fonction aldéhyde représente deux sites réactifs. Ainsi, par exemple, le 1,4-benzène-dicarboxaldéhyde a N1=4 sites réactifs.

On définit N2 comme le nombre de sites réactifs du polyphénol aromatique comme suit : chaque carbone libre du noyau aromatique adjacent à une fonction hydroxyle portée par le noyau aromatique représente un site réactif, chaque carbone libre ne pouvant être compté en tant que site réactif que pour une seule fonction hydroxyle adjacente. Ainsi, par exemple, le résorcinol et le phloroglucinol ont chacun N2=3 sites réactifs et le 2,2',4,4'-tétrahydroxydiphényl sulfide a N2=4 sites réactifs.

Typiquement, lors d'une première étape de résinification, on mélange les constituants de la résine thermodurcissable elle-même.

Cette première étape de résinification peut être réalisée selon plusieurs modes de réalisations.

Dans un premier mode de réalisation, on utilise une résine pré-condensée à base de polyphénol aromatique, c'est-à-dire issue à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé susceptible de réagir avec ledit polyphénol aromatique comprenant au moins une fonction aldéhyde.

La résine pré-condensée à base de polyphénol aromatique est avantageusement préparée en mélangeant progressivement le polyphénol aromatique et le composé susceptible de réagir avec ledit polyphénol aromatique comprenant au moins une fonction aldéhyde, par exemple le formaldéhyde, dans des quantités molaires telles que décrites précédemment.

Dans une première variante, on mélange les composants à base de la résine pré-condensée dans un solvant basique tel qu'une solution aqueuse de soude, ayant de préférence un pH compris entre 8 et 13, plus préférentiellement entre 9 et 12.

Dans une deuxième variante, on mélange les composants à base de la résine pré-condensée dans un solvant acide ou neutre tel qu'une solution aqueuse ayant un pH compris entre 4 et 7, de préférence entre 5 et 7.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation de la résine pré-condensée.

Quelle que soit la variante, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C.

Comme décrit précédemment, on peut avantageusement neutraliser le milieu de façon à obtenir une résine pré-condensée pouvant être stockée et utilisée ultérieurement.

Afin de préparer la résine pré-condensée, la quantité molaire n2 de polyphénol aromatique A2 et la quantité molaire n1 du composé aromatique A1 sont telles que [(n2^{∗}N2)+(n'2N'2)]/(n1^{∗}N1)>1, de préférence 1<[(n2^{∗}N2)+)+(n'2N'2)]/(n1^{∗}N1)<5.

Puis, dans ce premier mode de réalisation, on mélange progressivement cette résine pré-condensée à base de polyphénol aromatique et d'aldéhyde aromatique dans un solvant basique tel qu'une solution aqueuse de soude, ayant de préférence un pH compris entre 8 et 13, plus préférentiellement entre 9 et 12 ou bien dans un solvant acide ou neutre tel qu'une solution aqueuse ayant un pH compris entre 4 et 7, de préférence entre 5 et 7. Que ce soit en milieu acide ou basique, l'ensemble des constituants est mélangé sous agitation pendant un temps variable selon la température utilisée et la composition spécifique visée, par exemple pendant une durée pouvant varier entre 1 min et 6 h, à une température comprise entre 20°C et 90°C, préférentiellement entre 20 et 60°C. L'homme du métier saura ajuster les quantités molaires de résine pré-condensée à base de polyphénol aromatique et d'aldéhyde aromatique afin d'obtenir une réticulation et une concentration adaptées à l'usage recherché, notamment en fonction de la nature de la résine pré-condensée à base de polyphénol aromatique.

Dans un deuxième mode de réalisation, on utilise une résine pré-condensée à base :
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
- d'au moins un composé susceptible de réagir avec ledit polyphénol aromatique comprenant un aldéhyde aromatique porteur d'au moins une fonction aldéhyde, comprenant au moins un noyau aromatique.

Dans ce deuxième mode de réalisation, la résine pré-condensée à base de polyphénol aromatique est préparée dans des conditions analogues à la résine pré-condensée à base de polyphénol aromatique du premier mode de réalisation. Puis, on mélange progressivement cette résine pré-condensée à base de polyphénol aromatique et d'aldéhyde aromatique dans des conditions analogues à celles du premier mode de réalisation. Là encore, l'homme du métier saura ajuster les quantités molaires de résine pré-condensée à base de polyphénol aromatique et de l'aldéhyde aromatique afin d'obtenir une réticulation et une concentration adaptées à l'usage recherché, notamment en fonction de la nature de la résine pré-condensée à base de polyphénol aromatique.

Dans un troisième mode de réalisation, on utilise un polyphénol aromatique selon l'invention sous forme d'une molécule simple, par exemple du phloroglucinol.

Dans une première variante, on mélange tout d'abord le polyphénol aromatique dans un solvant basique tel qu'une solution aqueuse de soude, ayant de préférence un pH compris entre 9 et 13, plus préférentiellement entre 10 et 12 ou bien dans un solvant acide ou neutre tel qu'une solution aqueuse ayant un pH compris entre 4 et 7, de préférence entre 5 et 7.

Dans certains cas, par exemple à des concentrations relativement élevées ou dans le cas d'un solvant acide, l'homme du métier peut être amené à ajouter un épaississant, par exemple la carboxyméthylecellulose, ou un gélifiant, par exemple une gélatine, afin de limiter la sédimentation du polyphénol aromatique.

Puis, progressivement, on ajoute l'aldéhyde aromatique dans des conditions analogues à celles du premier mode de réalisation.

Dans une deuxième variante, on mélange tout d'abord l'aldéhyde aromatique dans une solution aqueuse, de préférence dans un solvant basique tel qu'une solution aqueuse de soude, ayant de préférence un pH compris entre 8 et 13, plus préférentiellement entre 9 et 12. Puis, on ajoute le polyphénol aromatique et on mélange les composants dans des conditions analogues à celles du premier mode de réalisation.

On mélange une quantité molaire n2 de polyphénol aromatique et une quantité molaire n1 d'aldéhyde aromatique telles que 0,3≤(n2^{∗}N2)/(n1^{∗}N1)≤3 et de préférence 1<(n2^{∗}N2)/(n1^{∗}N1)≤2.

Dans l'un quelconque de ces trois modes de réalisation, la résine thermodurcissable partiellement réticulée est généralement diluée dans l'eau, avant d'être ajoutée au latex ou aux latex (s'ils sont plusieurs) d'élastomère(s) insaturé(s) pour constituer la composition adhésive aqueuse de l'invention, selon un mode opératoire général qui est bien connu de l'homme du métier dans le domaine des colles RFL.

De préférence, lors de cette étape de constitution de la composition adhésive aqueuse, on fera en sorte que la composition adhésive aqueuse présente un pH compris entre 9 et 13, plus préférentiellement entre 10 et 12 de façon à limiter l'éventuelle précipitation du ou de certains latex d'élastomère(s) insaturé(s).

Ainsi, dans le cas où, lors de l'étape de résinification précédent cette étape de constitution de la composition adhésive aqueuse, on a utilisé un solvant acide ou neutre ou un solvant basique qui a été neutralisé, on ajoutera une base permettant d'obtenir un pH compris entre 9 et 13, plus préférentiellement entre 10 et 12 préalablement à l'ajout du ou des latex d'élastomère(s) insaturé(s) de façon à limiter l'éventuelle précipitation du ou de certains latex d'élastomère(s) insaturé(s).

Par exemple, les constituants de la composition adhésive sont ajoutés dans l'ordre suivant : l'eau, d'éventuels additifs solubles dans l'eau (par exemple ammoniaque), le ou les latex (peu importe l'ordre), la résine thermodurcissable partiellement réticulée (diluée). L'ensemble est mélangé sous agitation pendant 1 à 30 min, par exemple à 20°C.

Lors d'une dernière étape de fabrication, dite de maturation, la composition adhésive aqueuse est généralement stockée à température ambiante (23°C) pendant un temps de maturation pouvant varier typiquement de 1 à plusieurs heures voire plusieurs jours, avant son utilisation finale.

Dans la composition adhésive finale ainsi préparée, le taux d'extrait sec de résine phénol-aldéhyde représente de préférence entre 5 et 60 %, plus préférentiellement entre 10 et 30 % en poids de l'extrait sec de composition adhésive.

Le taux d'élastomère insaturé (c'est-à-dire l'extrait sec du ou des latex) est quant à lui compris de préférence entre 40 et 95 %, plus préférentiellement entre 70 et 90 %, en poids de l'extrait sec de la composition adhésive.

Le rapport pondéral de polyphénol sur aldéhyde aromatique est préférentiellement compris entre 0,1 et 3, plus préférentiellement entre 0,25 et 2.

Le rapport pondéral de l'extrait sec de résine sur l'extrait sec de latex est de préférence compris entre 0,1 et 2,0, plus préférentiellement entre 0,15 et 1,0.

La teneur en eau de la composition adhésive est de préférence comprise entre 60 et 90 %, plus préférentiellement entre 60 et 85 %.

Avantageusement, notamment dans le cas d'élément de renfort métallique, la composition adhésive comprend une gélatine. La gélatine permet de ralentir le démouillage des éléments de renfort et donc d'assurer une meilleure adhésion entre l'élément de renfort et le matériau élastomérique. Par gélatine, on entend tout mélange de protéines comprenant des produits de l'hydrolyse totale ou partielle de collagène.

### Matrice élastomérique

La matrice élastomérique dans laquelle est ou sont noyé(s) le ou les éléments de renfort comprend un ou plusieurs élastomères. La matrice élastomérique peut également comprendre un ou plusieurs autres composants.

De préférence, la matrice élastomérique comprend au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères.

Préférentiellement, la matrice élastomérique comprend au moins un élastomère choisi dans le groupe constitué par un élastomère de type éthylène alpha oléfine, un élastomère nitrile hydrogéné (HNBR), un élastomère polychloroprène (CR), un polybutadiène (BR), un caoutchouc naturel (NR), un copolymère de butadiène-styrène (SBR) et les mélanges de ces élastomères. Plus préférentiellement, la matrice élastomérique comprend au moins un élastomère choisi dans le groupe constitué par un élastomère de type éthylène alpha oléfine, un mélange de caoutchouc naturel (NR) et d'un élastomère de type éthylène alpha oléfine, un élastomère polychloroprène (CR) et un mélange d'un polybutadiène (BR) et d'un élastomère nitrile hydrogéné (HNBR). Encore plus préférentiellement, la matrice élastomérique comprend au moins un élastomère choisi dans le groupe constitué par un élastomère de type éthylène alpha oléfine et un élastomère polychloroprène (CR).

Dans un mode de réalisation préféré, la matrice élastomérique comprend un élastomère de type éthylène alpha oléfine. De préférence, dans ce mode de réalisation, la matrice élastomérique comprend au moins 50 pce de l'élastomère de type éthylène alpha oléfine et plus préférentiellement au moins 60 pce de l'élastomère de type éthylène alpha oléfine.

Avantageusement, l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

Dans un mode de réalisation préféré, la matrice élastomérique comprend un élastomère polychloroprène. De préférence, dans ce mode de réalisation, la matrice élastomérique comprend au moins 50 pce de l'élastomère polychloroprène et plus préférentiellement au moins 60 pce de l'élastomère polychloroprène.

Dans un mode de réalisation, la matrice élastomérique comprend une charge renforçante.

Lorsqu'une charge renforçante est utilisée, on peut utiliser tout type de charge renforçante connue pour ses capacités à renforcer une matrice élastomérique, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les matrices élastomériques.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une matrice élastomérique, en d'autres termes apte à remplacer, dans sa fonction de renforcement, un noir de carbone conventionnel. Une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de micro-perles, de granules, de billes ou toute autre forme densifiée appropriée. Bien entendu, on entend également par charge inorganique renforçante des mélanges de différentes charges inorganiques renforçantes.

Comme charges inorganiques renforçantes conviennent notamment des charges minérales du type siliceuse, en particulier de la silice (SiO₂), ou du type alumineuse, en particulier de l'alumine (Al₂O₃).

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyle, nécessitant l'utilisation d'un agent de couplage pour établir la liaison entre la charge et l'élastomère.

De préférence, le taux de charge renforçante totale (noir de carbone et/ou charge inorganique renforçante) est compris dans un domaine de 10 à 100 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades différents. Le noir de carbone peut être également utilisé en coupage avec d'autres charges renforçantes et en particulier des charges inorganiques renforçantes telles que décrites précédemment, et en particulier de la silice.

Préférentiellement, la matrice élastomérique comprend un sel métallique d'acide organique α, β insaturé. Avantageusement, le taux de sel métallique d'acide organique α, β insaturé va de 2 à 50 pce, et de préférence de 15 à 25 pce.

Dans un mode de réalisation préféré, le sel métallique d'acide organique α, β insaturé est du méthacrylate de zinc, en particulier du mono-méthacrylate de zinc.

De préférence, la matrice élastomérique comprend des additifs divers.

Les compositions de caoutchouc peuvent comporter également tout ou partie des additifs usuels habituellement utilisés dans les matériaux élastomériques, comme par exemple des plastifiants ou des huiles d'extension, que ces derniers soient de nature aromatique ou non-aromatique, des agents de protection tels que cires anti-ozone, anti-ozonants chimiques, antioxydants, des agents anti-fatigue ou bien encore des promoteurs d'adhésion, tels que par exemple ceux-divulgués dans EP0964030.

De préférence, la matrice élastomérique comprend un système de réticulation.

Le système de réticulation comprend avantageusement un peroxyde, de préférence un peroxyde organique. Avantageusement, le taux de peroxyde va de 0,5 à 8 pce.

Dans certains modes de réalisation, le système de réticulation comprend un agent de co-réticulation, de préférence du soufre ou du triallylcyanurate. Avantageusement, le taux de l'agent de co-réticulation va de 0,5 à 5 pce.

### Elément de renfort

Dans un mode de réalisation, l'élément de renfort est métallique.

Avantageusement, l'élément de renfort est un élément de renfort filaire. Par élément de renfort filaire, on entend les éléments longilignes de grande longueur relativement à leur section transversale, quelle que soit la forme de cette dernière, par exemple circulaire, oblongue, rectangulaire ou carrée, ou même plate, cet élément filaire pouvant être rectiligne comme non rectiligne, par exemple torsadé, ou ondulé. Lorsqu'il est de forme circulaire, le diamètre de chaque élément de renfort filaire est de préférence inférieur à 5 mm, plus préférentiellement compris dans un domaine allant de 0,1 à 0,5 mm. On citera également les feuillards ou les bandes qui présentent une grande longueur par rapport à leur épaisseur.

L'élément de renfort peut comprendre, dans un mode de réalisation, un unique monofilament élémentaire métallique. Dans un autre mode de réalisation, l'élément de renfort comprend plusieurs monofilaments élémentaires métalliques assemblés ensemble, par exemple par câblage ou retordage. Parmi les éléments de renfort comprenant plusieurs monofilaments élémentaires métalliques, on citera par exemple les câbles à couches et les câbles multi-torons. Chaque monofilament élémentaire métallique filaire est unitaire, c'est-à-dire que les constituants de chaque monofilament élémentaire métallique sont indissociables les uns des autres.

Avantageusement, l'élément de renfort métallique comprend un ou plusieurs monofilaments élémentaires métalliques comprenant chacun une âme en acier. L'âme en acier est monolithique, c'est-à-dire qu'elle est par exemple venue de matière ou de moulage.

Dans un mode de réalisation, la couche adhésive revêt directement l'âme en acier du ou de chaque monofilament élémentaire métallique. La couche adhésive revêt au moins une partie du ou de chaque monofilament élémentaire métallique. Ainsi, la couche adhésive peut revêtir partiellement ou en totalité le ou chaque monofilament élémentaire métallique. Ainsi, dans le mode de réalisation dans lequel l'élément de renfort comprend un unique monofilament élémentaire métallique, la couche adhésive peut revêtir certaines parties de ce monofilament ou bien sa totalité. Dans le mode de réalisation dans lequel l'élément de renfort comprend plusieurs monofilaments élémentaires métalliques, la couche adhésive peut revêtir plusieurs monofilaments élémentaires métalliques sans en revêtir d'autres ou bien revêtir uniquement certaines parties de certains ou de tous les é monofilaments élémentaires métalliques.

L'acier peut présenter une microstructure perlitique, ferritique, austénitique, bainitique, martensitique ou une microstructure issue d'un mélange de ces microstructures.

De préférence, l'acier comprend un taux de carbone allant de 0,2 % à 1 % en masse et plus préférentiellement de 0,3 % à 0,7 % en masse.

Dans un mode de réalisation, l'acier utilisé comprend moins de 0,5 %, de préférence au plus 0,05 % borne incluse, et plus préférentiellement au plus 0,02 % borne incluse en masse de chrome.

Dans un autre mode de réalisation utilisant de l'acier dit inoxydable, l'acier comprend au moins 0,5 % borne incluse, de préférence au moins 5 % borne incluse et plus préférentiellement au moins 15 % borne incluse en masse de chrome.

Dans un autre mode de réalisation, la couche adhésive revêt directement une couche d'un revêtement métallique revêtant directement l'âme en acier du ou de chaque monofilament élémentaire métallique. Le métal de la couche du revêtement métallique est réalisé dans un métal différent de l'acier.

De préférence, le métal de la couche du revêtement métallique revêtant directement au moins une partie de l'âme en acier du ou de chaque monofilament élémentaire métallique est choisi parmi le zinc, le cuivre, l'étain et les alliages de ces métaux. Comme exemples d'alliages de ces métaux, on citera le laiton et le bronze.

Dans encore un autre mode de réalisation, la couche adhésive revêt directement une couche intermédiaire d'adhésion non métallique revêtant l'âme en acier du ou de chaque monofilament élémentaire métallique. Dans une variante de ce mode de réalisation, la couche intermédiaire d'adhésion non métallique revêt directement la couche du revêtement métallique revêtant directement l'âme en acier du ou de chaque élément de renfort filaire. La couche intermédiaire non métallique, généralement appelée primaire d'adhésion, permet, en combinaison avec la couche adhésive comprenant la composition adhésive, d'améliorer l'adhésion de l'élément de renfort à la composition élastomérique de liaison. De tels primaires d'adhésion sont ceux couramment utilisés par l'homme du métier pour le pré-encollage de certaines fibres textiles (notamment fibres en polyester, par exemple PET, en aramide, en aramide/nylon). Par exemple, on pourra utiliser un primaire à base d'époxy, notamment à base de polyglycérol polyglycidyl éther. On pourra également utiliser un primaire à base d'isocyanate bloqué.

Par couche revêtant « directement » un objet, on entend que la couche est au contact de l'objet sans qu'aucun autre objet, notamment une autre couche ne soit interposé entre les deux.

Dans un autre mode de réalisation, l'élément de renfort est non-métallique.

L'élément de renfort peut ainsi être un élément filaire tel qu'un monofilament, un brin multifilamentaires de plusieurs monofilaments élémentaires, un assemblage de plusieurs brin multifilamentaires, un film, ou également un tissu réalisé à partir d'un ou plusieurs de ces éléments, par exemple d'un tissu tramé, un tissu croisé ou un tricot.

Avantageusement, l'élément de renfort non-métallique est un élément filaire. Par filaire, on entend de manière générale tout élément longiligne de grande longueur relativement à sa section transversale, quelle que soit la forme de cette dernière, par exemple circulaire, oblongue, rectangulaire ou carrée, ou même plate, cet élément filaire pouvant être rectiligne comme non rectiligne, par exemple torsadé, ou ondulé. La plus grande dimension de sa section transversale est préférentiellement inférieure à 5 mm, plus préférentiellement inférieur à 3 mm. Cet élément filaire peut prendre tout forme connue, il peut s'agir par exemple d'un monofilament élémentaire de diamètre important (par exemple et de préférence égal ou supérieur à 50 µm), d'un brin multifilamentaire (constituée d'une pluralité de filaments élémentaires de faible diamètre, typiquement inférieur à 30 µm), d'un retors ou câblé formé de plusieurs brins multifialementaires ou brins monofilamentaires retordus ou câblés ensemble, ou encore d'un assemblage, un groupe, une rangée de monofilaments, élément filaire tels que par exemple une bande ou bandelette comportant plusieurs de ces monofilaments, brins multifialementaires ou brins monofilamentaires regroupés ensemble, par exemple alignés selon une direction principale, rectiligne ou pas. De tels éléments filaires peuvent également être des films. Par film, on entend de manière générale un élément longiligne, de grande longueur relativement à sa section transversale, dont la section transversale présente un rapport de forme (largeur sur épaisseur) supérieur à 5, de préférence supérieur à 10, et dont la largeur est préférentiellement au moins égale à 3 mm, plus préférentiellement au moins égale à 5 mm.

De préférence, l'élément de renfort non-métallique comprend au moins un brin multifilamentaire de monofilaments élémentaires. Préférentiellement, l'élément de renfort non métallique comprend plusieurs brins multifilamentaires de monofilaments élémentaires, ces brins multifilamentaires étant enroulés en hélice l'un autour de l'autre.

Préférentiellement, l'élément de renfort non-métallique est réalisé dans un matériau choisi dans le groupe constitué par les matériaux textiles, les matériaux minéraux et les associations de ces matériaux.

Par définition, dans la présente demande, on entend par textile, de manière bien connue de l'homme du métier, tout matériau en matière naturelle comme synthétique, susceptible d'être transformée en monofilament, fibre ou film par tout procédé de transformation approprié. On peut citer par exemple, sans que les exemples ci-après soient limitatifs, un procédé de filage de polymère tel que par exemple filage au fondu, filage en solution ou filage de gel.

Dans une variante, l'élément de renfort non-métallique est réalisé dans un matériau textile, de préférence choisi dans le groupe constitué par les polyesters, les polyamides, les polycétones, les alcools polyvinyliques, les celluloses et les associations de ces matériaux.

Parmi les polyesters, on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Parmi les polyamides, on citera les polyamides aliphatiques tels que les polyamides 4-6, 6, 6-6 (nylon), 11 ou 12 et les polyamides aromatiques tels que l'aramide.

Parmi les celluloses, on citera la cellulose naturelle comme artificielle, telle que le coton, la rayonne, le lin, le chanvre.

Plus préférentiellement, l'élément de renfort non-métallique est réalisé dans un matériau textile choisi dans le groupe constitué par les polyesters, les polyamides aliphatiques et les polyamides aromatiques et les associations de ces matériaux.

Dans une autre variante, l'élément de renfort non-métallique est réalisé dans un matériau minéral choisi dans le groupe constitué par les fibres de verre, les fibres de carbone et les associations de ces matériaux.

### Couche de liaison

De préférence, la composition élastomérique de liaison comprend au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomère.

Préférentiellement, la composition élastomérique de liaison comprend au moins un élastomère choisi dans le groupe constitué par un élastomère de type éthylène alpha oléfine, un élastomère polychloroprène (CR), un caoutchouc naturel (NR) et les mélanges de ces élastomères. Plus préférentiellement, la composition élastomérique de liaison comprend au moins un élastomère choisi dans le groupe constitué par un élastomère de type éthylène alpha oléfine, un mélange de caoutchouc naturel (NR) et d'un élastomère de type éthylène alpha oléfine et un élastomère polychloroprène (CR). Encore plus préférentiellement, la composition élastomérique de liaison comprend au moins un élastomère choisi dans le groupe constitué par un élastomère de type éthylène alpha oléfine et un élastomère polychloroprène (CR).

Avantageusement, l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

Dans un mode de réalisation préféré, le ou les élastomères de la composition élastomérique de liaison est ou sont identiques au ou aux élastomères de la matrice élastomérique.

De préférence, la couche élastomérique de liaison forme une gaine autour de l'élément de renfort. Une telle gaine permet d'assurer un serrage mécanique de la couche élastomérique de liaison contre l'élément de renfort revêtu de la couche adhésive.

Dans un mode de réalisation, la couche adhésive revêt directement l'élément de renfort non-métallique.

Dans un autre mode de réalisation, la couche adhésive revêt directement une composition de cohésion imprégnant l'élément de renfort non-métallique. Les éléments de renfort ainsi imprégnés subissent ensuite le revêtement par la composition adhésive. De préférence, la composition de cohésion est à base d'un produit de réaction d'un isocyanate. Un tel produit de réaction est par exemple une urétidinedione, un isocyanurate ou bien un mélange de ces deux composés.

Par couche revêtant « directement » un objet, on entend que la couche est au contact de l'objet sans qu'aucun autre objet, notamment une autre couche ne soit interposé entre les deux.

Dans un mode de réalisation particulièrement préféré, le composite forme une courroie de transmission de puissance.

Avantageusement, la courroie de transmission de puissance comprend une couche d'entrainement mécanique agencée au contact du corps élastomérique, la couche d'entrainement mécanique étant pourvue de nervures.

De préférence, la couche d'entrainement est réalisée dans une composition élastomérique comprenant au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères.

Avantageusement, l'élastomère de la composition élastomérique de la couche d'entrainement est choisi dans le groupe constitué par un élastomère de type éthylène alpha oléfine, un élastomère polychloroprène (CR), un polybutadiène (BR), un caoutchouc naturel (NR), un copolymère de butadiène-styrène (SBR) et les mélanges de ces élastomères.

Plus préférentiellement, l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

### PROCEDE DE FABRICATION DU COMPOSITE ET D'UNE COURROIE DE TRANSMISSION DE PUISSANCE

Un autre objet de l'invention est un procédé de fabrication d'un composite, comprenant les étapes suivantes :
1) agencer, à l'état cru, un empilement comportant, dans cet ordre :
   - une première couche élastomérique réalisée dans un premier matériau élastomérique,
   - au moins un élément de renfort revêtu d'une couche adhésive réalisée dans une composition adhésive, la couche adhésive étant revêtue directement d'une couche élastomérique de liaison réalisée dans une composition élastomérique de liaison, la composition adhésive comportant au moins une résine phénol-aldéhyde à base :
      - d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
      - d'au moins un aldéhyde aromatique porteur d'au moins une fonction aldéhyde, comprenant au moins un noyau aromatique,
   - une deuxième couche élastomérique réalisée dans un deuxième matériau élastomérique,
2) mouler et réticuler l'empilement.

Dans un mode de réalisation préféré, le procédé comprend, préalablement à l'étape d'agencement de l'empilement, une étape d'imprégnation de l'élément de renfort par une composition de cohésion.

Avantageusement, le procédé comprend, préalablement à l'étape d'agencement de l'empilement, une étape de revêtement de l'élément de renfort par la composition adhésive, cette étape de revêtement pouvant avantageusement être réalisée postérieurement à l'étape d'imprégnation précédemment décrite.

Avantageusement, le procédé comprend, préalablement à l'étape d'agencement de l'empilement, une étape de revêtement de la couche adhésive directement par la composition élastomérique de liaison, cette étape étant implicitement réalisée postérieurement à l'étape de revêtement de l'élément de renfort par la composition adhésive.

L'étape de revêtement de la composition adhésive sur l'élément de renfort peut être réalisée selon toute méthode appropriée, notamment par toute technique d'enduction connue telle que par exemple pulvérisation, imprégnation par trempage, défilement dans un bain ou autre technique équivalente de dépôt de film de colle mince ou ultra-mince, ou encore par une combinaison d'une ou plusieurs de ces techniques.

Le poids d'extrait sec de la composition adhésive aqueuse déposée sur un kilogramme de l'élément de renfort est de préférence compris entre 5 et 100 g, plus préférentiellement entre 30 et 70 g, encore plus préférentiellement entre 40 et 60 g.

Dans un des modes de réalisation, préalablement à l'étape de revêtement de l'élément de renfort par la composition adhésive, on imprègne l'élément de renfort par une composition de cohésion.

Après l'étape précédemment décrite de revêtement de la composition adhésive, l'élément de renfort revêtu subit un premier traitement thermique visant à éliminer tout solvant ou eau, à une température comprise de préférence entre 110°C et 260°C, plus préférentiellement entre 130°C et 250°C, par exemple par traversée d'un four-tunnel, typiquement de plusieurs mètres de long, tels que ceux utilisés couramment pour le traitement thermique après encollage des éléments de renfort textiles revêtus d'une colle RFL.

Puis, le matériau anhydre ainsi obtenu subit un second traitement thermique pour terminer la réticulation de la composition adhésive, préférentiellement conduit à l'air dans un four tunnel tel que décrit ci-dessus. La température de traitement est de préférence comprise entre 150°C et 350°C. Les durées de traitement sont de quelques secondes à quelques minutes selon les cas (par exemple entre 10 s et 10 min).

L'homme du métier saura ajuster, le cas échéant, la température et la durée du traitement thermique ci-dessus, en fonction des conditions particulières de mise en oeuvre de l'invention, notamment de la nature exacte de l'élément de renfort, en particulier selon que l'on traite des monofilaments, des brins multifilamentaires, des assemblages de brins multifilamentaires ou des films. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

L'étape de revêtement directe de la couche adhésive par la composition élastomérique de liaison peut être réalisée par toute technique connue de revêtement telle que par exemple l'imprégnation par trempage, l'imprégnation par badigeon, la cémentation ou encore par une combinaison d'une ou plusieurs de ces techniques. Très préférentiellement, on revêt directement la couche adhésive de la composition élastomérique de liaison par extrusion d'une gaine de la composition élastomérique de liaison autour de l'élément de renfort revêtu de la couche la couche adhésive. L'extrusion de la gaine autour de la couche adhésive permet d'assurer une bonne cohésion entre la gaine et la composition adhésive, améliorant l'endurance du composite final.

Avantageusement, chaque premier et deuxième matériau élastomérique comprend au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères.

Encore plus avantageusement, chaque premier et deuxième matériau élastomérique comprend au moins un élastomère choisi dans le groupe constitué par un élastomère de type éthylène alpha oléfine, un élastomère nitrile hydrogéné (HNBR) un élastomère polychloroprène (CR), un polybutadiène (BR), un caoutchouc naturel (NR), un copolymère de butadiène-styrène (SBR) et les mélanges de ces élastomères. Plus préférentiellement, chaque premier et deuxième matériau élastomérique comprend au moins un élastomère choisi dans le groupe constitué par un élastomère de type éthylène alpha oléfine, un mélange de caoutchouc naturel (NR) et d'un élastomère de type éthylène alpha oléfine, un élastomère polychloroprène (CR) et un mélange d'un polybutadiène (BR) et d'un élastomère nitrile hydrogéné (HNBR). Encore plus préférentiellement, chaque premier et deuxième matériau élastomérique comprend au moins un élastomère choisi dans le groupe constitué par un élastomère de type éthylène alpha oléfine et un élastomère polychloroprène (CR).

De préférence, l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

Dans un mode de réalisation particulier, lors de l'étape d'agencement de l'empilement, on empile, après la deuxième couche élastomérique, une troisième couche élastomérique réalisée dans un troisième matériau élastomérique.

Avantageusement, le troisième matériau élastomérique est réalisé dans une composition élastomérique comprenant au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères.

De préférence, l'élastomère de la composition élastomérique du troisième matériau élastomérique est choisi dans le groupe constitué par un élastomère de type éthylène alpha oléfine, un élastomère polychloroprène (CR), un polybutadiène (BR), un caoutchouc naturel (NR), un copolymère de butadiène-styrène (SBR) et les mélanges de ces élastomères.

Plus préférentiellement, l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

L'invention a également pour objet un procédé de fabrication d'une courroie de transmission de puissance comprenant les étapes suivantes :
1) agencer, à l'état cru, un empilement comportant, dans cet ordre :
   - une première couche élastomérique réalisée dans un premier matériau élastomérique,
   - au moins un élément de renfort revêtu d'une couche adhésive réalisée dans une composition adhésive, la couche adhésive étant revêtue directement d'une couche élastomérique de liaison réalisée dans une composition élastomérique de liaison, la composition adhésive comportant au moins une résine phénol-aldéhyde à base :
      - d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
      - d'au moins un aldéhyde aromatique porteur d'au moins une fonction aldéhyde, comprenant au moins un noyau aromatique,
   - une deuxième couche élastomérique réalisée dans un deuxième matériau élastomérique,
   - une troisième couche élastomérique d'entrainement mécanique agencée au contact de la deuxième couche élastomérique réalisée dans un troisième matériau élastomérique,
2) mouler et réticuler l'empilement.

Les caractéristiques décrites ci-dessus s'appliquent tout autant au procédé de fabrication du composite qu'au procédé de fabrication de la courroie de transmission.

De préférence, on moule et on réticule l'empilement de façon à ménager dans la troisième couche des nervures d'entrainement mécanique.

### EXEMPLES DE REALISATION DE L'INVENTION ET TESTS COMPARATIFS

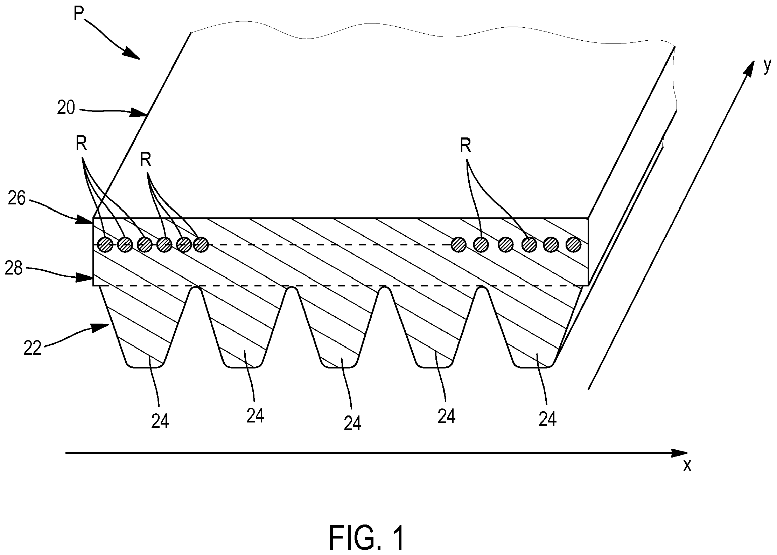

On a représenté sur la figure 1 un composite selon l'invention formant une courroie de transmission de puissance P. La courroie de transmission de puissance P est destinée à l'entrainement en rotation d'un organe quelconque. La courroie de transmission de puissance P comprend un corps élastomérique 20 réalisé dans une matrice élastomérique et dans lequel sont noyés des éléments de renfort revêtus R. La courroie de transmission de puissance P comprend également une couche 22 d'entrainement mécanique agencée au contact du corps élastomérique 20. La couche d'entrainement mécanique 22 est pourvue de plusieurs nervures 24 s'étendant chacune selon une direction générale Y sensiblement perpendiculaire à une direction longitudinale X de la courroie P. Chaque nervure 24 présente une forme trapézoïdale en section transversale. Les directions générales des nervures 24 sont sensiblement parallèles entre elles. Les nervures 24 s'étendent sur toute la longueur de la courroie P. Ces nervures 24 sont destinées à être engagées dans des gorges ou des rainures de forme complémentaire, par exemple portées par des poulies sur lesquelles la courroie est destinée à être montée.

Le corps élastomérique 20 est formé d'une part par une première couche élastomérique 26 réalisée dans un premier matériau élastomérique et d'autre part par une deuxième couche élastomérique 28 réalisée dans un deuxième matériau élastomérique. La couche d'entrainement mécanique 22 est formée par une troisième couche réalisée dans un troisième matériau élastomérique.

Chaque premier et deuxième matériau élastomérique comprend une charge renforçante, ici du noir de carbone (10 à 100 pce), un sel métallique d'acide organique α, β insaturé, ici du monométhacrylate de zinc (2 à 50 pce), un agent de dispersion de la charge renforçante (1 à 10 pce), un antioxydant (0,5 à 8 pce), un peroxyde organique (0,5 à 8 pce), un co-agent de réticulation (0,5 à 5 pce en poids) et un plastifiant (1 à 20 pce en poids).

Chaque premier et deuxième matériau élastomérique comprend également au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères. En l'espèce, chaque premier et deuxième matériau élastomérique comprend au moins un élastomère choisi dans le groupe constitué par un élastomère de type éthylène alpha oléfine, un élastomère nitrile hydrogéné (HNBR) un élastomère polychloroprène (CR), un polybutadiène (BR), un caoutchouc naturel (NR), un copolymère de butadiène-styrène (SBR) et les mélanges de ces élastomères. Plus préférentiellement, chaque premier et deuxième matériau élastomérique comprend au moins un élastomère choisi dans le groupe constitué par un élastomère de type éthylène alpha oléfine, un mélange de caoutchouc naturel (NR) et d'un élastomère de type éthylène alpha oléfine, un élastomère polychloroprène (CR) et un mélange d'un polybutadiène (BR) et d'un élastomère nitrile hydrogéné (HNBR). Encore plus préférentiellement, chaque premier et deuxième matériau élastomérique comprend au moins un élastomère choisi dans le groupe constitué par un élastomère de type éthylène alpha oléfine et un élastomère polychloroprène (CR). Ici, chaque premier et deuxième matériau élastomérique comprend un mélange de caoutchouc naturel (NR) et d'un copolymère d'éthylène-propylène-diène (EPDM), la proportion de caoutchouc naturel étant inférieur à 30 pce.

Le troisième matériau élastomérique est réalisé dans une composition élastomérique comprenant au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères. En l'espèce, l'élastomère de la composition élastomérique du troisième matériau élastomérique est choisi dans le groupe constitué par un élastomère de type éthylène alpha oléfine, un élastomère polychloroprène (CR), un polybutadiène (BR), un caoutchouc naturel (NR), un copolymère de butadiène-styrène (SBR) et les mélanges de ces élastomères. Ici, l'élastomère de la composition élastomérique du troisième matériau élastomérique est un élastomère de type éthylène alpha oléfine, par exemple un copolymère d'éthylène-propylène (EPM), un copolymère d'éthylène-propylène-diène (EPDM) ou un mélange de ces copolymères.

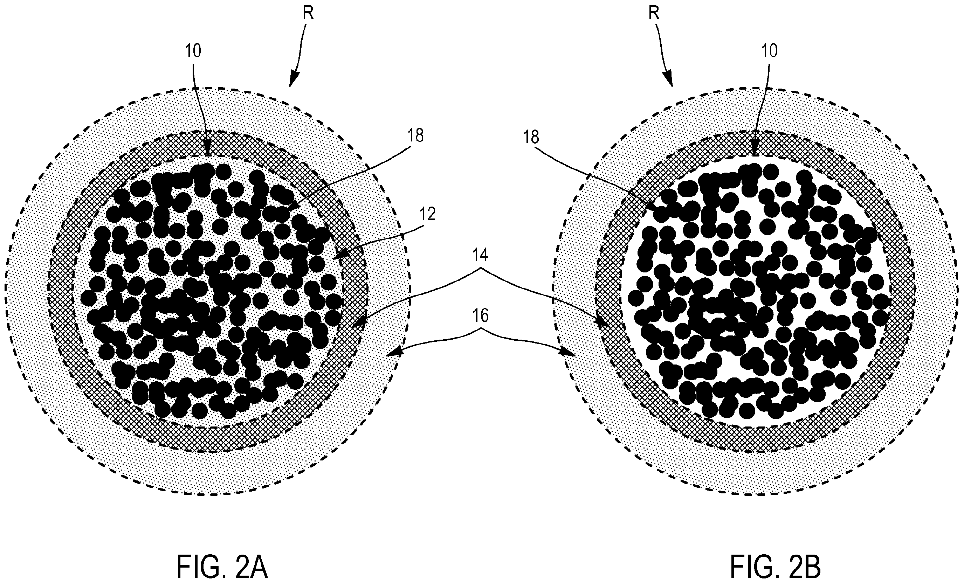

On a représenté sur les figures 2A et 2B deux variantes d'éléments de renfort R revêtus conformes à l'invention. On a représenté, sur la figure 2A, un élément de renfort R comprenant un élément de renfort 10 imprégné d'une composition de cohésion 12 décrite ci-dessous, revêtue directement d'une couche 14 adhésive réalisée dans une composition adhésive C1 décrite ci-dessous. L'élément de renfort 10 comprend plusieurs brins multifilamentaires de monofilaments élémentaires 18, ici des monofilaments en polyamide, en l'espèce du nylon 4-6. A la différence de l'élément de renfort R de la figure 1A, l'élément de renfort de la figure 1B est dépourvu de composition de cohésion 12. Les éléments de renfort R revêtus des figures 2A et 2B comprennent une couche élastomérique 16 de liaison revêtant directement la couche adhésive 14. Le corps élastomérique 20 revêt directement la couche élastomérique de liaison 16.

La composition élastomérique de liaison comprend au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères. En l'espèce, l'élastomère de la composition élastomérique de liaison est choisi dans le groupe constitué par un élastomère de type éthylène alpha oléfine, un élastomère polychloroprène (CR), un caoutchouc naturel (NR) et les mélanges de ces élastomères. Plus préférentiellement, la composition élastomérique de liaison comprend au moins un élastomère choisi dans le groupe constitué par un élastomère de type éthylène alpha oléfine, un mélange de caoutchouc naturel (NR) et d'un élastomère de type éthylène alpha oléfine et un élastomère polychloroprène (CR). Encore plus préférentiellement, la composition élastomérique de liaison comprend au moins un élastomère choisi dans le groupe constitué par un élastomère de type éthylène alpha oléfine et un élastomère polychloroprène (CR). Ici, chaque premier et deuxième matériau élastomérique comprend un mélange de caoutchouc naturel (NR) et d'un copolymère d'éthylène-propylène-diène (EPDM), la proportion de caoutchouc naturel étant inférieur à 30 pce.

On va maintenant décrire un procédé de fabrication de la courroie P des variantes des figures 2A, 2B des éléments de renfort revêtus R.

Tout d'abord, pour l'élément de renfort revêtu R de la figure 2A, le procédé comprend une étape d'imprégnation de chaque élément de renfort 10 par la composition de cohésion 12. Pour ce faire, on fait défiler l'élément de renfort 10 dans un bain généralement à base d'isocyanate dans un solvant, par exemple à base de toluène.

Puis, le procédé comprend une étape de de revêtement de l'élément de renfort par la composition adhésive C1. Pour ce faire, on fait défiler les éléments de renforts dans la composition adhésive C0 ou C1, puis on sèche les éléments de renfort ainsi revêtus dans un four de séchage à 140 °C pendant 30 s. Puis la composition adhésive est réticulée par passage des éléments de renforts revêtus dans un four de traitement à 240 °C pendant 30 s.

Puis, lors d'une étape ultérieure, le procédé comprend une étape de revêtement de la couche adhésive directement par une composition élastomérique de liaison. En l'espèce, on revêt directement la couche adhésive C1 de la composition élastomérique de liaison par extrusion d'une gaine de la composition élastomérique de liaison autour de l'élément de renfort revêtu de la couche la couche adhésive. On obtient alors des éléments de renfort revêtus de la couche adhésive réalisée dans la composition adhésive, la couche adhésive étant revêtue directement de la couche élastomérique de liaison réalisée dans la composition élastomérique de liaison. La couche élastomérique de liaison forme alors une gaine autour de l'élément de renfort.

Ensuite, on agence à l'état cru, c'est-à-dire à l'état non réticulé, un empilement comportant dans cet ordre :
- la première couche élastomérique 26 réalisée dans le premier matériau élastomérique,
- plusieurs éléments de renforts R tels que décrits ci-dessus,
- la deuxième couche élastomérique 28 réalisée dans le deuxième matériau élastomérique,
- la troisième couche élastomérique 22 au contact de la deuxième couche élastomérique 28 et réalisée dans le troisième matériau élastomérique.

Puis, après cette étape d'agencement, on manipule l'empilement à l'état cru et on le place dans un moule. On moule et on réticule alors l'empilement précédemment obtenu. On obtient alors la courroie P de la figure 1.

### Test d'endurance

On a fabriqué cinq courroies de transmission de puissance P1 à P5 d'une façon analogue au procédé décrit ci-dessus afin d'évaluer la performance en endurance apportée par la composition adhésive selon l'invention (courroies P1 et P2 selon l'invention) par rapport à une composition adhésive de type RFL (courroies témoins P3, P4 et P5).

Pour cela, deux compositions adhésives aqueuses ont été préparées, l'une conformément à l'invention (notée ci-après C1) et une non conformément à l'invention (composition témoin notée ci-après C0). Leurs formulations (exprimées en pourcentage en poids) sont présentées dans le tableau 1 annexé. Les quantités répertoriées dans ce tableau sont celles des constituants à l'état sec, ramenées à un total de 100 parties en poids de composition adhésive aqueuse (c'est-à-dire les constituants plus l'eau).

La composition témoin C0 est une colle RFL classique.

La composition C1 comporte au moins une résine phénol-aldéhyde à base d'au moins :
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
- d'au moins un aldéhyde aromatique porteur d'au moins une fonction aldéhyde, comprenant au moins un noyau aromatique.

Concernant le polyphénol aromatique, le noyau aromatique du polyphénol aromatique est porteur de trois fonctions hydroxyle en position méta les unes par rapport aux autres. Les deux positions ortho de chaque fonction hydroxyle sont non substituées. Le reste du noyau aromatique du polyphénol aromatique est non substitué. Ici, le polyphénol comprend un unique noyau aromatique et ce noyau aromatique est un noyau benzénique. Le polyphénol est choisi dans le groupe constitué par le résorcinol, le phloroglucinol, le 2,2',4,4'-tétrahydroxydiphényl sulfide, la 2,2',4,4'-tétrahydroxybenzophénone, les résines pré-condensées à partir d'au moins un de ces polyphénols aromatiques et les mélanges de ces composés. Ici, il s'agit du phloroglucinol.

Concernant l'aldéhyde, le noyau aromatique est porteur de la fonction aldéhyde. L'aldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le furfuraldéhyde, le 2,5-furanedicarboxaldéhyde et les mélanges de ces composés, de préférence l'aldéhyde aromatique est choisi parmi le 1,3-benzène-dicarboxaldéhyde, le 1,4-benzène-dicarboxaldéhyde, le furfuraldéhyde, le 2,5-furanedicarboxaldéhyde et les mélanges de ces composés. L'aldéhyde aromatique est un polyaldéhyde aromatique dans lequel le noyau aromatique est porteur d'au moins deux fonctions aldéhydes, ici deux exactement. Le noyau aromatique de l'aldéhyde aromatique est un noyau benzénique. Plus préférentiellement ici, l'aldéhyde aromatique est le 1,4-benzène-dicarboxaldéhyde.

La composition adhésive comprend également un latex d'élastomère insaturé comprenant un ou plusieurs élastomères. En l'espèce, les élastomères insaturés du latex sont des élastomères diéniques, choisi de préférence dans le groupe constitué par les polybutadiènes, les copolymères de butadiène, les polyisoprènes, les copolymères d'isoprène, les terpolymères vinylpyridine-styrène-butadiène, les élastomères de type éthylène alpha oléfine, les élastomères polychloroprène et les mélanges de ces élastomères. Ici, il s'agit d'un mélange NR/SBR/VP-SBR.

**Tableau 1**

| **Compositions adhésives** | **C0** | **C1** |
|---|---|---|
| Aldéhyde : | | |
| Formaldéhyde (1) | 0.9 | - |
| 1,4-benzènedicarboxaldéhyde (2) | - | 0.9 |
| Polyphénol : | | |
| Résorcinol (3) | 1.7 | - |
| Phloroglucinol (4) | - | 1.7 |
| Hydroxyde de sodium (5) | 0.2 | 0.2 |
| Latex d'élastomères : | | |
| NR (6) | 6.4 | 6.4 |
| SBR (7) | 3.2 | 3.2 |
| VP-SBR (8) | 6.4 | 6.4 |
| Ammoniaque (9) | 0.5 | 0.5 |
| | | |
| Poids total d'extrait sec de composition adhésive | 19.3 | 19.3 |
| Poids d'eau | 80.7 | 80.7 |

| **Tests d'adhésion** | | |
|---|---|---|
| Fₘₐₓ à 20°C | 100 | 120 |
| Fₘₐₓ à 120 °C | 100 | 116 |

| | | |
|---|---|---|
| (1) Formol (de la société Caldic ; dilué à 36%) ; (2) 1,4-benzènedicarboxaldéhyde (de la société ABCR ; de pureté 98%) ; (3) Résorcinol (de la société Sumitomo ; de pureté 99.5%) ; (4) Phloroglucinol (de la société Alfa Aesar ; de pureté 99%) ; (5) Hydroxyde de sodium (de la société Aldrich ; dilué à 30%) ; (6) Latex NR (« Trang Latex » de la société Bee tex ; dilué à 61% en poids) ; (7) Latex SBR (« Encord-201 » de la société Jubilant ; dilué à 41% en poids) ; (8) Latex Vinylpyridine-styrène-butadiène («VP 106S» de Eliokem ; dilué à 41%) ; (9) Ammoniaque (de la société Aldrich ; diluée à 21%). | | |

A partir de ces deux compositions adhésives, on a préparé plusieurs éléments de renforts revêtus R01, R02, R11 et R12 dont les caractéristiques sont rassemblées dans le tableau 2 ci-dessous.

Chaque élément de renfort est un élément de renfort non-métallique comprenant trois brins multifilamentaires de monofilaments élémentaires de titre de 2350 tex assemblés ensembles selon une torsion de 125 tours.m⁻¹. Chaque élément de renfort est réalisé dans un matériau textile, ici un polyamide aliphatique, en l'espèce du nylon 4-6.

Comme indiqué dans le tableau 2, les éléments de renforts R01 et R11 sont imprégnés d'une composition de cohésion qui est ultérieurement elle-même directement revêtue de la couche de composition adhésive respectivement C0 et C1. En l'espèce, la composition de cohésion est à base d'un produit de réaction d'au moins un isocyanate, ici ce produit de réaction est un isocyanurate. Comme indiqué dans le tableau 2, les éléments de renfort R02 et R12 sont dépourvus de la composition de cohésion.

Chaque élément de renfort R01, R02, R11 et R12 est revêtu d'une couche adhésive C0 ou C1 réalisée dans une composition adhésive et revêtant soit directement l'élément de renfort directement pour les éléments de renfort R02 et R12, soit directement la composition de cohésion imprégnant l'élément de renfort pour les éléments de renfort R01 et R11.

**Tableau 2**

| | **R01** | **R02** | **R11** | **R12** |
|---|---|---|---|---|
| **Composition de cohésion** | Oui | Non | Oui | Non |
| **Composition adhésive** | C0 | C0 | C1 | C1 |

Puis, pour certains d'entre eux (éléments de renfort utilisés dans les courroies P1 à P4), on a revêtu directement la couche adhésive C0 ou C1 de la composition élastomérique de liaison par extrusion d'une gaine de la composition élastomérique de liaison autour de l'élément de renfort revêtu de la couche la couche adhésive conformément au procédé décrit ci-dessus..

On obtient alors chaque courroie de transmission de puissance P1 à P5 dont les caractéristiques sont rassemblées dans le tableau 3 ci-dessous. Puis, on a réalisé un test d'endurance au cours duquel on a testé, pour chaque courroie P1 à P5, dix échantillons. On a soumis chaque échantillon à des cycles de déplacement à une température comprise entre 100°C et 150°C, à une fréquence comprise entre 5 et 20 Hz sous une précharge comprise entre 20 et 100 N.

**Tableau 3**

| | **P1** | **P2** | **P3** | **P4** | **P5** |
|---|---|---|---|---|---|
| **Composition de cohésion** | Non | Oui | Non | Oui | Oui |
| **Composition adhésive** | C1 | C1 | C0 | C0 | C0 |
| **Elément de renfort** | R12 | R11 | R02 | R01 | R01 |
| **Couche de liaison** | Oui | Oui | Oui | Oui | Non |
| **Nm cycles moyens à rupture** | Nm=3.10⁶ | Nm>10⁸ | Nm=3.10⁶ | Nm=5.10⁶ | Nm<10⁶ |

Ces résultats démontrent que les courroies selon l'invention P1 et P2 présentent une endurance comparable voire supérieure à des courroies utilisant des compositions adhésives classiques de type RFL. L'endurance est notamment nettement améliorée lorsque l'élément de renfort de la courroie est imprégné d'une composition de cohésion (courroie P2) ce qui démontre un effet synergique entre la composition de cohésion, la composition adhésive et la couche de liaison.

En outre, ces résultats démontrent que la présence d'une couche de liaison permet d'améliorer significativement l'endurance des courroies. A posteriori, les inventeurs à l'origine de l'invention explique cela par le « tack » ou collant à cru que confère la couche de liaison et qui assure une bonne cohésion entre la composition adhésive et la matrice élastomérique. En l'absence de cette couche de liaison, comme c'est le cas dans la courroie P5, la cohésion créée lors de l'agencement de l'empilement entre la composition adhésive et la matrice élastomérique est insufisante et conduit à une endurance réduite.

L'invention ne se limite pas aux modes de réalisation décrits précédemment.

On pourra également envisager d'exploiter un composite dans lequel l'élément de renfort est métallique. Ainsi, l'élément de renfort métallique comprendrait un ou plusieurs monofilaments élémentaires métalliques comprenant chacun une âme en acier. Dans un mode de réalisation, la couche adhésive revêt directement l'âme en acier du ou de chaque monofilament élémentaire métallique. Dans un autre mode de réalisation, la couche adhésive revêt directement une couche d'un revêtement métallique revêtant directement l'âme en acier du ou de chaque monofilament élémentaire métallique. Le métal de la couche du revêtement métallique revêtant directement l'âme en acier du ou de chaque monofilament élémentaire métallique est choisi parmi le zinc, le cuivre, l'étain et les alliages de ces métaux. Avantageusement, la couche adhésive revêt directement une couche intermédiaire d'adhésion non métallique revêtant l'âme en acier du ou de chaque monofilament élémentaire métallique.

## Revendications

1. Composite (P1, P2) comprenant :
- au moins un élément de renfort (10),
- une couche adhésive (14) réalisée dans une composition adhésive et revêtant l'élément de renfort (10),
- une couche élastomérique de liaison (16) réalisée dans une composition élastomérique de liaison et revêtant directement la couche adhésive (14),
- un corps élastomérique (20) réalisé dans une matrice élastomérique et dans lequel est noyé l'élément de renfort (10) revêtu de la couche adhésive (14) et de la couche élastomérique de liaison (16),
le composite (P1, P2) étant **caractérisé en ce que** la composition adhésive comporte au moins une résine phénol-aldéhyde à base:
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
- d'au moins un aldéhyde aromatique porteur d'au moins une fonction aldéhyde, comprenant au moins un noyau aromatique.

2. Composite (P1, P2) selon la revendication précédente, dans lequel le polyphénol aromatique est choisi dans le groupe constitué par le résorcinol, le phloroglucinol, le 2,2',4,4'-tétrahydroxydiphényl sulfide, la 2,2',4,4'-tétrahydroxybenzophénone, les résines pré-condensées à partir d'au moins un de ces polyphénols aromatiques et les mélanges de ces composés.

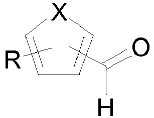

3. Composite (P1, P2) selon l'une quelconque des revendications précédentes, dans lequel l'aldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le furfuraldéhyde, le 2,5-furanedicarboxaldéhyde et les mélanges de ces composés, de préférence l'aldéhyde aromatique est choisi parmi le 1,3-benzène-dicarboxaldéhyde, le 1,4-benzène-dicarboxaldéhyde, le furfuraldéhyde, le 2,5-furanedicarboxaldéhyde et les mélanges de ces composés, plus préférentiellement l'aldéhyde aromatique est le 1,4-benzène-dicarboxaldéhyde.

4. Composite (P1, P2) selon l'une quelconque des revendications précédentes, dans lequel la composition adhésive comprend au moins un latex d'élastomère insaturé.

5. Composite (P1, P2) selon la revendication précédente, dans lequel l'élastomère insaturé du latex est un élastomère diénique, choisi de préférence dans le groupe constitué par les polybutadiènes, les copolymères de butadiène, les polyisoprènes, les copolymères d'isoprène, les terpolymères vinylpyridine-styrène-butadiène, les élastomères de type éthylène alpha oléfine, les élastomères polychloroprène (CR) et les mélanges de ces élastomères.

6. Composite (P1, P2) selon la revendication précédente, dans lequel l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

7. Composite (P1, P2) selon l'une quelconque des revendications précédentes, dans lequel la matrice élastomérique (16) comprend au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères.

8. Composite (P1, P2) selon la revendication précédente, dans lequel la matrice élastomérique (16) comprend au moins un élastomère choisi dans le groupe constitué par un élastomère de type éthylène alpha oléfine, un élastomère nitrile hydrogéné (HNBR), un élastomère polychloroprène (CR), un polybutadiène (BR), un caoutchouc naturel (NR), un copolymère de butadiène-styrène (SBR) et les mélanges de ces élastomères.

9. Composite (P1, P2) selon la revendication 7 ou 8, dans lequel l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

10. Composite (P1, P2) selon l'une quelconque des revendications précédente, dans lequel l'élément de renfort (10) est non-métallique.

11. Composite (P1, P2) selon l'une quelconque des revendications précédentes, dans lequel la composition élastomérique de liaison comprend au moins un élastomère choisi dans le groupe constitué par un élastomère de type éthylène alpha oléfine, un élastomère nitrile hydrogéné (HNBR), un élastomère nitrile (NBR), un polyéthylène chlorosulfoné avec groupements alkyles (ACSM), un élastomère polychloroprène (CR), un polybutadiène (BR), un caoutchouc naturel (NR), un polyisoprène de synthèse (IR), un copolymère de butadiène-styrène (SBR), un copolymère d'isoprène-butadiène (BIR), un copolymère d'isoprène-styrène (SIR), un copolymère de butadiène-styrène-isoprène (SBIR) et les mélanges de ces élastomères.

12. Composite (P1, P2) selon la revendication précédente, dans lequel l'élastomère de la composition élastomérique de liaison est choisi dans le groupe constitué par un élastomère de type éthylène alpha oléfine, un élastomère polychloroprène (CR), un caoutchouc naturel (NR) et les mélanges de ces élastomères.

13. Composite (P1, P2) selon la revendication 11 ou 12, dans lequel l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

14. Composite (P1, P2) selon l'une quelconque des revendications précédentes, formant une courroie de transmission de puissance.

15. Procédé de fabrication d'un composite (P1, P2), **caractérisé en ce que** le procédé comprend les étapes suivantes :
1) agencer, à l'état cru, un empilement comportant, dans cet ordre :
- une première couche élastomérique (26) réalisée dans un premier matériau élastomérique,
- au moins un élément de renfort (10) revêtu d'une couche adhésive (14) réalisée dans une composition adhésive, la couche adhésive (14) étant revêtue directement d'une couche élastomérique (16) de liaison réalisée dans une composition élastomérique de liaison, la composition adhésive comportant au moins une résine phénol-aldéhyde à base :
- d'au moins un polyphénol aromatique comprenant au moins un noyau aromatique porteur d'au moins deux fonctions hydroxyle en position méta l'une par rapport à l'autre, les deux positions ortho d'au moins une des fonctions hydroxyle étant non substituées, et
- d'au moins un aldéhyde aromatique porteur d'au moins une fonction aldéhyde, comprenant au moins un noyau aromatique,
- une deuxième couche élastomérique (28) réalisée dans un deuxième matériau élastomérique,
2) mouler et réticuler l'empilement.

## Patentansprüche

1. Verbund (P1, P2), umfassend:
- mindestens ein Verstärkungselement (10),
- eine Klebstoffschicht (14), die aus einer Klebstoffzusammensetzung hergestellt ist und mit der das Verstärkungselement (10) beschichtet ist,
- eine elastomere Verbindungsschicht (16), die aus einer elastomeren Verbindungszusammensetzung besteht und mit der die Klebstoffschicht (14) direkt beschichtet ist,
- einen elastomeren Körper (20), der aus einer elastomeren Matrix besteht und in den das mit der Klebstoffschicht (14) und der elastomeren Verbindungsschicht (16) beschichtete Verstärkungselement (10) eingebettet ist,
wobei der Verbund (P1, P2) **dadurch gekennzeichnet ist, dass** die Klebstoffzusammensetzung mindestens ein Phenol-Aldehyd-Harz auf Basis von
- mindestens einem aromatischen Polyphenol mit mindestens einem aromatischen Kern, der mindestens zwei Hydroxylfunktionen in meta-Position zueinander trägt, wobei die beiden ortho-Positionen zu mindestens einer der Hydroxylfunktionen unsubstituiert sind, und
- mindestens einem aromatischen Aldehyd, der mindestens eine Aldehydfunktion trägt und mindestens einen aromatischen Kern umfasst,
umfasst.

2. Verbund (P1, P2) nach dem vorhergehenden Anspruch, wobei das aromatische Polyphenol aus der Gruppe bestehend aus Resorcinol, Phloroglucinol, 2,2',4,4'-Tetrahydroxydiphenylsulfid, 2,2',4,4'-Tetrahydroxybenzophenon, aus mindestens einem dieser aromatischen Polyphenole vorkondensierten Harzen und Mischungen dieser Verbindungen ausgewählt ist.

3. Verbund (P1, P2) nach einem der vorhergehenden Ansprüche, wobei der aromatische Aldehyd aus der Gruppe bestehend aus 1,2-Benzoldicarboxaldehyd, 1,3-Benzoldicarboxaldehyd, 1,4-Benzoldicarboxaldehyd, Furfuraldehyd, 2,5-Furandicarboxaldehyd und Mischungen dieser Verbindungen ausgewählt ist, wobei der aromatische Aldehyd vorzugsweise aus 1,3-Benzoldicarboxaldehyd, 1,4-Benzoldicarboxaldehyd, Furfuraldehyd, 2,5-Furandicarboxaldehyd und Mischungen dieser Verbindungen ausgewählt ist und es sich bei dem aromatischen Aldehyd weiter bevorzugt um 1,4-Benzoldicarboxaldehyd handelt.

4. Verbund (P1, P2) nach einem der vorhergehenden Ansprüche, wobei die Klebstoffzusammensetzung mindestens einen Latex eines ungesättigten Elastomers umfasst.

5. Verbund (P1, P2) nach dem vorhergehenden Anspruch, wobei es sich bei dem ungesättigten Elastomer des Latex um ein Dienelastomer, das vorzugsweise aus der Gruppe bestehend aus Polybutadienen, Butadien-Copolymeren, Polyisoprenen, Isopren-Copolymeren, Vinylpyridin-Styrol-Butadien-Terpolymeren, Elastomeren vom Ethylen-alpha-Olefin-Typ, Polychloroprenelastomeren (CR) und Mischungen dieser Elastomere ausgewählt ist.

6. Verbund (P1, P2) nach dem vorhergehenden Anspruch, wobei das Elastomer vom Ethylen-alpha-Olefin-Typ aus der Gruppe bestehend aus Ethylen-Propylen-Copolymeren (EPM), Ethylen-Propylen-Dien-Copolymeren (EPDM) und Mischungen dieser Copolymere ausgewählt ist.

7. Verbund (P1, P2) nach einem der vorhergehenden Ansprüche, wobei die elastomere Matrix (16) mindestens ein Elastomer aus der Gruppe bestehend aus einem Elastomer vom Ethylen-alpha-Olefin-Typ, einem hydrierten Nitrilelastomer (HNBR), einem Nitrilelastomer (NBR), einem chlorsulfonierten Polyethylen mit Alkylgruppen (ACSM), einem Polychloroprenelastomer (CR), einem Polybutadien (BR), einem Naturkautschuk (NR), einem synthetischen Polyisopren (IR), einem Butadien-Styrol-Copolymer (SBR), einem Isopren-Butadien-Copolymer (BIR), einem Isopren-Styrol-Copolymer (SIR), einem Butadien-Styrol-Isopren-Copolymer (SBIR) und Mischungen dieser Elastomere umfasst.

8. Verbund (P1, P2) nach dem vorhergehenden Anspruch, wobei die elastomere Matrix (16) mindestens ein Elastomer aus der Gruppe bestehend aus einem Elastomer vom Ethylen-alpha-Olefin-Typ, einem hydrierten Nitrilelastomer (HNBR), einem Polychloroprenelastomer (CR), einem Polybutadien (BR), einem Naturkautschuk (NR), einem Butadien-Styrol-Copolymer (SBR) und Mischungen dieser Elastomere umfasst.

9. Verbund (P1, P2) nach Anspruch 7 oder 8, wobei das Elastomer vom Ethylen-alpha-Olefin-Typ aus der Gruppe bestehend aus Ethylen-Propylen-Copolymeren (EPM), Ethylen-Propylen-Dien-Copolymeren (EPDM) und Mischungen dieser Copolymere ausgewählt ist.

10. Verbund (P1, P2) nach einem der vorhergehenden Ansprüche, wobei das Verstärkungselement (10) nichtmetallisch ist.

11. Verbund (P1, P2) nach einem der vorhergehenden Ansprüche, wobei die elastomere Verbindungszusammensetzung mindestens ein Elastomer aus der Gruppe bestehend aus einem Elastomer vom Ethylen-alpha-Olefin-Typ, einem hydrierten Nitrilelastomer (HNBR), einem Nitrilelastomer (NBR), einem chlorsulfonierten Polyethylen mit Alkylgruppen (ACSM), einem Polychloroprenelastomer (CR), einem Polybutadien (BR), einem Naturkautschuk (NR), einem synthetischen Polyisopren (IR), einem Butadien-Styrol-Copolymer (SBR), einem Isopren-Butadien-Copolymer (BIR), einem Isopren-Styrol-Copolymer (SIR), einem Butadien-Styrol-Isopren-Copolymer (SBIR) und Mischungen dieser Elastomere umfasst.

12. Verbund (P1, P2) nach dem vorhergehenden Anspruch, wobei das Elastomer der elastomeren Verbindungszusammensetzung aus der Gruppe bestehend aus einem Elastomer vom Ethylen-alpha-Olefin-Typ, einem Polychloroprenelastomer (CR), einem Naturkautschuk (NR) und Mischungen dieser Elastomere ausgewählt ist.

13. Verbund (P1, P2) nach Anspruch 11 oder 12, wobei das Elastomer vom Ethylen-alpha-Olefin-Typ aus der Gruppe bestehend aus Ethylen-Propylen-Copolymeren (EPM), Ethylen-Propylen-Dien-Copolymeren (EPDM) und Mischungen dieser Copolymere ausgewählt ist.

14. Verbund (P1, P2) nach einem der vorhergehenden Ansprüche, der einen Kraftübertragungsriemen bildet.

15. Verfahren zur Herstellung eines Verbunds (P1, P2), **dadurch gekennzeichnet, dass** das Verfahren die folgenden Schritte umfasst:
1) Zusammenstellen eines Stapels in ungehärtetem Zustand, der in der angegebenen Reihenfolge Folgendes umfasst:
- eine erste elastomere Schicht (26) aus einem ersten elastomeren Material,
- mindestens ein Verstärkungselement (10), das mit einer Klebstoffschicht (14) aus einer Klebstoffzusammensetzung beschichtet ist, wobei die Klebstoffschicht (14) direkt mit einer elastomeren Verbindungsschicht (16) aus einer elastomeren Verbindungszusammensetzung beschichtet ist, wobei die Klebstoffzusammensetzung mindestens ein Phenol-Aldehyd-Harz auf Basis von
- mindestens einem aromatischen Polyphenol mit mindestens einem aromatischen Kern, der mindestens zwei Hydroxylfunktionen in meta-Position zueinander trägt, wobei die beiden ortho-Positionen zu mindestens einer der Hydroxylfunktionen unsubstituiert sind, und
- mindestens einem aromatischen Aldehyd, der mindestens eine Aldehydfunktion trägt und mindestens einen aromatischen Kern umfasst, umfasst,
- eine zweite elastomere Schicht (28) aus einem zweiten elastomeren Material,
2) Formen und Vernetzen des Stapels.

## Claims

1. Composite (P1, P2) comprising:
- at least one reinforcing element (10),
- an adhesive layer (14) made from an adhesive composition and coating the reinforcing element (10),
- an elastomeric bonding layer (16) made from an elastomeric bonding composition and directly coating the adhesive layer (14),
- an elastomeric body (20) made from an elastomeric matrix and embedded in which is the reinforcing element (10) coated with the adhesive layer (14) and with the elastomeric bonding layer (16),
the composite (P1, P2) being **characterized in that** the adhesive composition comprises at least one phenol-aldehyde resin based:
- on at least one aromatic polyphenol comprising at least one aromatic ring bearing at least two hydroxyl functions in the meta position relative to one another, the two positions ortho to at least one of the hydroxyl functions being unsubstituted, and
- on at least one aromatic aldehyde bearing at least one aldehyde function, comprising at least one aromatic ring.

2. Composite (P1, P2) according to the preceding claim, in which the aromatic polyphenol is selected from the group consisting of resorcinol, phloroglucinol, 2,2',4,4'-tetrahydroxydiphenyl sulfide, 2,2',4,4'-tetrahydroxybenzophenone, resins pre-condensed from at least one of these aromatic polyphenols and the mixtures of these compounds.

3. Composite (P1, P2) to any one of the preceding claims, in which the aromatic aldehyde is selected from the group consisting of 1,2-benzenedicarboxaldehyde, 1,3-benzenedicarboxaldehyde, 1,4-benzenedicarboxaldehyde, furfuraldehyde, 2,5-furandicarboxaldehyde and the mixtures of these compounds, preferably the aromatic aldehyde is selected from 1,3-benzenedicarboxaldehyde, 1,4-benzenedicarboxaldehyde, furfuraldehyde, 2,5-furandicarboxaldehyde and the mixtures of these compounds, more preferentially the aromatic aldehyde is 1,4-benzenedicarboxaldehyde.

4. Composite (P1, P2) according to any one of the preceding claims, in which the adhesive composition comprises at least one unsaturated elastomer latex.

5. Composite (P1, P2) according to the preceding claim, in which the unsaturated elastomer of the latex is a diene elastomer preferably selected from the group consisting of polybutadienes, butadiene copolymers, polyisoprenes, isoprene copolymers, vinylpyridine-styrene-butadiene terpolymers, ethylene/alpha-olefin type elastomers, polychloroprene elastomers (CR) and the mixtures of these elastomers.

6. Composite (P1, P2) according to the preceding claim, in which the ethylene/alpha-olefin type elastomer is selected from the group consisting of ethylene-propylene copolymers (EPM), ethylene-propylene-diene copolymers (EPDM), and the mixtures of these copolymers.

7. Composite (P1, P2) according to any one of the preceding claims, in which the elastomeric matrix (16) comprises at least one elastomer selected from the group consisting of an ethylene/alpha-olefin type elastomer, a hydrogenated nitrile elastomer (HNBR), a nitrile elastomer (NBR), a chlorosulfonated polyethylene with alkyl groups (ACSM), a polychloroprene elastomer (CR), a polybutadiene (BR), a natural rubber (NR), a synthetic polyisoprene (IR), a butadiene-styrene copolymer (SBR), an isoprene-butadiene copolymer (BIR), an isoprene-styrene copolymer (SIR), a butadiene-styrene-isoprene copolymer (SBIR) and the mixtures of these elastomers.

8. Composite (P1, P2) according to the preceding claim, in which the elastomeric matrix (16) comprises at least one elastomer selected from the group consisting of an ethylene/alpha-olefin type elastomer, a hydrogenated nitrile elastomer (HNBR), a polychloroprene elastomer (CR), a polybutadiene (BR), a natural rubber (NR), a butadiene-styrene copolymer (SBR) and the mixtures of these elastomers.

9. Composite (P1, P2) according to Claim 7 or 8, in which the ethylene/alpha-olefin type elastomer is selected from the group consisting of ethylene-propylene copolymers (EPM), ethylene-propylene-diene copolymers (EPDM), and the mixtures of these copolymers.

10. Composite (P1, P2) according to any one of the preceding claims, in which the reinforcing element (10) is nonmetallic.

11. Composite (P1, P2) according to any one of the preceding claims, in which the elastomeric bonding composition comprises at least one elastomer selected from the group consisting of an ethylene/alpha-olefin type elastomer, a hydrogenated nitrile elastomer (HNBR), a nitrile elastomer (NBR), a chlorosulfonated polyethylene with alkyl groups (ACSM), a polychloroprene elastomer (CR), a polybutadiene (BR), a natural rubber (NR), a synthetic polyisoprene (IR), a butadiene-styrene copolymer (SBR), an isoprene-butadiene copolymer (BIR), an isoprene-styrene copolymer (SIR), a butadiene-styrene-isoprene copolymer (SBIR) and the mixtures of these elastomers.

12. Composite (P1, P2) according to the preceding claim, in which the elastomer of the elastomeric bonding composition is selected from the group consisting of an ethylene/alpha-olefin type elastomer, a polychloroprene elastomer (CR), a natural rubber (NR) and the mixtures of these elastomers.

13. Composite (P1, P2) according to Claim 11 or 12, in which the ethylene/alpha-olefin type elastomer is selected from the group consisting of ethylene-propylene copolymers (EPM), ethylene-propylene-diene copolymers (EPDM), and the mixtures of these copolymers.

14. Composite (P1, P2) according to any one of the preceding claims, forming a power transmission belt.

15. Process for manufacturing a composite (P1, P2), **characterized in that** the process comprises the following steps:
1) arranging, in the uncured state, a stack comprising, in this order:
- a first elastomeric layer (26) made from a first elastomeric material,
- at least one reinforcing element (10) coated with an adhesive layer (14) made from an adhesive composition, the adhesive layer (14) being directly coated with an elastomeric bonding layer (16) made from an elastomeric bonding composition, the adhesive composition comprising at least one phenol-aldehyde resin based:
- on at least one aromatic polyphenol comprising at least one aromatic ring bearing at least two hydroxyl functions in the meta position relative to one another, the two positions ortho to at least one of the hydroxyl functions being unsubstituted, and
- on at least one aromatic aldehyde bearing at least one aldehyde function, comprising at least one aromatic ring,
- a second elastomeric layer (28) made from a second elastomeric material,
2) moulding and crosslinking the stack.
